# EUROPEAN PATENT APPLICATION

(11) **EP 4 617 536 A1**
(43) Date of publication of application: **17.09.2025**
(21) Application number: 23888623.8
(22) Date of filing: 02.11.2023
(51) Int. Cl.: F16K 31/06, G05D 16/00

(54) **VALVE**

(30) Priority: 07.11.2022 JP 2022178387
(71) Applicant: Eagle Industry Co., Ltd., Minato-ku Tokyo 105-8587 (JP)
(72) Inventor: KURIHARA Daichi, Tokyo 105-8587 (JP); SHIMIZU Satoshi, Tokyo 105-8587 (JP); FUKUDOME Kohei, Tokyo 105-8587 (JP); EJIMA Takahiro, Tokyo 105-8587 (JP); HASHIGUCHI Akihiro, Tokyo 105-8587 (JP)
(74) Representative: Seifert, Ruth
(86) International application number: PCT/JP2023/039692
(87) International publication number: WO 2024/101275

(57) **Abstract**

To provide a valve capable of accurately controlling pressure discharged from a valve.

A valve 1 includes: a valve body 51 provided between a first pressure chamber 13 and a second pressure chamber 14, and controlling a flow rate of fluid passing through the first pressure chamber 13 and the second pressure chamber 14 by opening and closing of the valve 1; and a valve seat 15a. A pressure sensitive body 61 into which the pressure of the first pressure chamber 13 is introduced and which is disposed in a portion of the second pressure chamber 14 and configured for coming into contact with and separating from the valve body 51.

## Description

### {TECHNICAL FIELD}

The present invention relates to a valve, for example a valve that controls flow rate.

### {BACKGROUND ART}

In various fields, valves are known that are provided in a flow path through which a fluid flows and are suitable for controlling a flow rate according to an opening of the valve.

For example, the valve in Patent Citation 1 is a solenoid expansion valve mainly including a valve seat, a valve body, a spring, and a solenoid. The valve seat is provided between a primary pressure chamber communicating with the primary pressure side of the flow path and a secondary pressure chamber communicating with the secondary pressure side of the flow path. The valve body is pressed toward the valve seat by the spring. In addition, the valve body is movable in a direction where it is separated from the valve seat in response to the electromagnetic force of the solenoid.

Accordingly, the valve of Patent Citation 1 remains in a closed state where it is in contact with the valve seat when de-energized or until the electromagnetic force exceeds the biasing force of the spring, and when the electromagnetic force exceeds the biasing force of the spring, the valve is separated from the valve seat and is brought into an open state.

### {CITATION LIST}

### {Patent Literature}

Patent Citation 1: JP 2013-145090 A (Pages 5 and 6, FIG. 2)

### {SUMMARY OF INVENTION}

### {Technical Problem}

In the valve of Patent Citation 1, the electromagnetic force changes depending to the amount of energization, enabling adjustment of the opening between the valve body and the valve seat to control the flow rate of the fluid and adjust the secondary pressure. However, in a valve such as that in Patent Citation 1, for example, when the primary pressure increases in the closed state, causing a large differential pressure with the secondary pressure, a difference in opening may occur even with the same amount of energization. This causes unevenness in the secondary pressure, which is a problem.

The present invention has been made in view of such problems, and an object of the present invention is to provide a valve capable of accurately controlling the pressure discharged from the valve.

### {Solution to Problem}

In order to solve the foregoing problems, a valve according to the present invention includes: a valve body provided between a first pressure chamber and a second pressure chamber and controlling a flow rate of fluid passing through the first pressure chamber and the second pressure chamber by opening and closing of the valve; a valve seat; and a pressure sensitive body into which pressure in the first pressure chamber is introduced and which is disposed in a portion of the second pressure chamber and configured for coming into contact with and separating from the valve body. According to the aforesaid feature of the present invention, the effect of pressure on the valve body can be reduced to accurately control the pressure discharged from the valve.

It may be preferable that the valve is switchable between a first mode in which the valve is in an open state and a second mode in which throttle control of the valve is performed at a position of the valve body closer to the valve seat than in the open state. According to this preferable configuration, the valve has a function of an on-off valve and a function of a pressure reducing valve. Accordingly, the valve can contribute to simplifying control while reducing the number of parts.

It may be preferrable that the valve body is separated from the pressure sensitive body in the first mode and brought into contact with the pressure sensitive body in the second mode. According to this preferable configuration, the valve can quickly transition from the first mode to the second mode, and accurately control the pressure discharged from the valve in the second mode.

It may be preferable that the pressure sensitive body has an adapter, the valve body has a contact portion at an end, and at least one of the adapter and the contact portion has a tapered surface, and the tapered surface and remaining one of the adapter and contact portion are brought into contact with and separated from each other. According to this preferable configuration, when the valve transitions from the first mode to the second mode, the tapered surface provided on the one is guided by the other. Accordingly, the valve body is aligned. Therefore, the valve can improve the accuracy of the control of the pressure discharged from the valve.

It may be preferrable that the valve body has a communication passage that communicates with a space defined by the contact portion of the valve body and the adapter and with the first pressure chamber in the second mode. According to this preferable configuration, the fluid can pass between the space and the first pressure chamber, allowing the valve body to be momentarily come into contact with and be separated from the pressure sensitive body.

It may be preferable that an effective opening area of the valve and an effective area of the pressure sensitive body are equal to each other. According to this preferable configuration, the valve can cause the valve body to operate without being affected by pressure.

### {BRIEF DESCRIPTION OF DRAWINGS}

FIG. 1 is a schematic diagram illustrating a heat pump cycle to which a valve according to an embodiment of the present invention is applied.
FIG. 2 is a sectional view illustrating the valve in an open state in the embodiment.
FIG. 3 is a diagram for explaining a shaft holding member in the embodiment.
FIG. 4 is a graph for explaining the transition of a valve state relative to the amount of energization in the embodiment.
FIG. 5 is a sectional view illustrating the valve immediately after operation in the embodiment.
FIG. 6 is a sectional view illustrating the valve in a throttle control state in the embodiment.
FIG. 7 is a sectional view illustrating the valve in a closed state in the embodiment.

### {DESCRIPTION OF EMBODIMENTS}

Modes for implementing a valve according to the present invention will be described below based on an embodiment.

### {Embodiment}

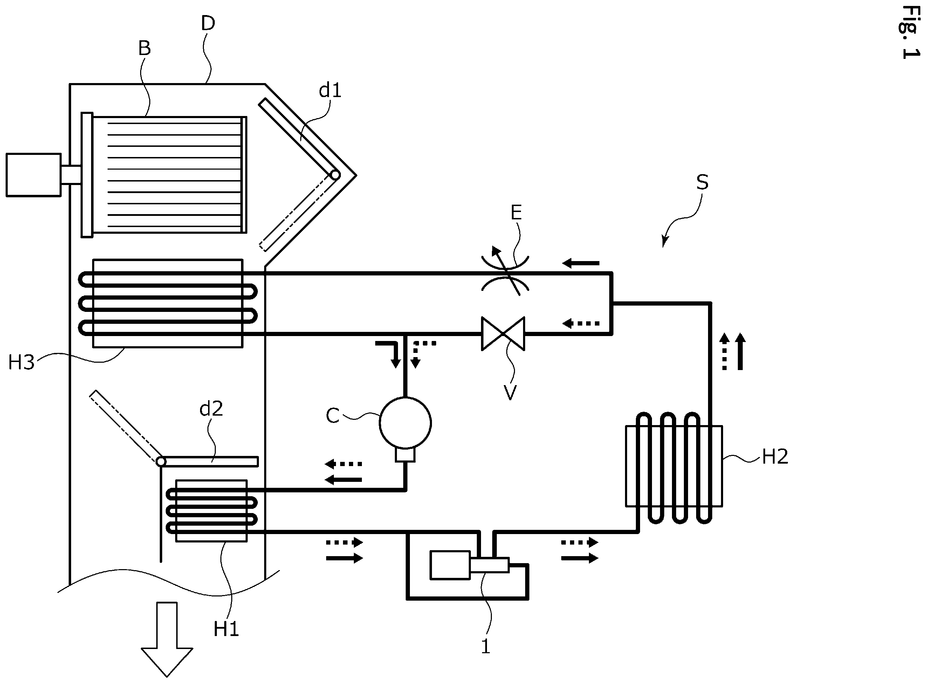

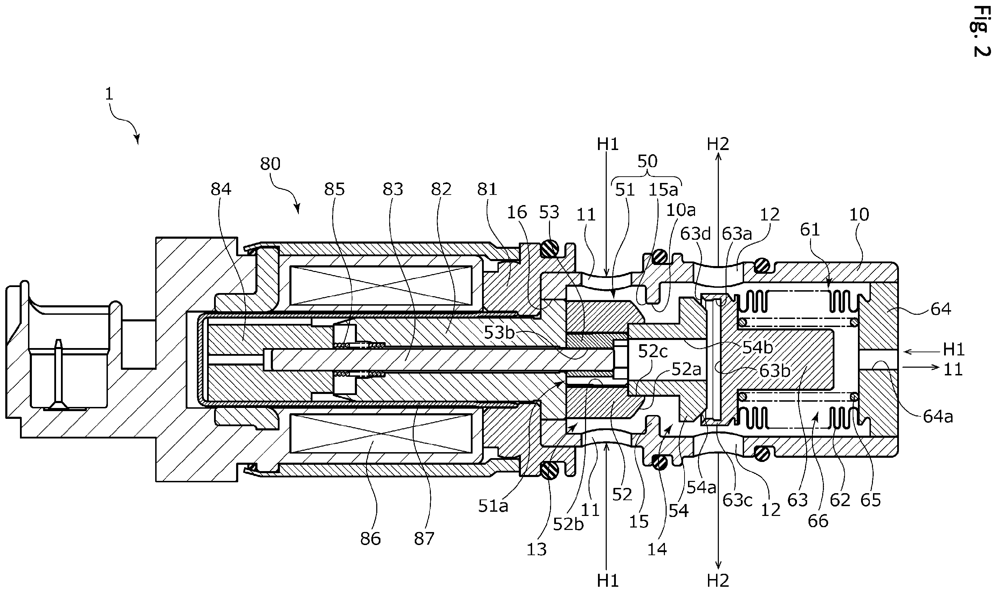

An electromagnetic valve functioning as an expansion valve during heating as a valve according to an embodiment of the present invention will be described with reference to FIGS. 1 to 7. Hereinafter, the right and left sides when viewed from the front in FIG. 2 are described below as the right and left sides of the electromagnetic valve. Specifically, the description will be made based on the assumption that the right side of the drawing sheet where a valve housing 10 is disposed is a right side of the electromagnetic valve and the left side of the drawing sheet where a solenoid 80 is disposed is a left side of the electromagnetic valve.

As illustrated in FIG. 1, the electromagnetic valve 1 of the present invention together with a compressor C, heat exchangers H1, H2, H3, an on-off valve V, an expansion valve E, and the like constitutes a heat pump cycle S suitable for an air conditioning system of an automobile or the like.

In the heat pump cycle S during cooling, the on-off valve V is in a closed state and the expansion valve E is in an opening throttle control state. Accordingly, the heat medium circulates through the heat pump cycle S in the order of the compressor C, the heat exchanger H1, the electromagnetic valve 1, the heat exchanger H2, the expansion valve E, and the heat exchanger H3 as illustrated by the solid arrows in FIG. 1. At this time, the electromagnetic valve 1 is in an open state.

The heat exchangers H1, H3 are disposed in a duct D into which air is introduced from outside or inside a vehicle depending on the position of a damper d1 on the upstream side. During cooling, air sent out by a blower B disposed in the duct D passes through the heat exchanger H3.

The air thus cooled is guided to a damper d2 on the downstream side illustrated by the solid line in FIG. 1 and is supplied to the interior of the vehicle as illustrated by the open arrow in FIG. 1. In other words, the air that has passed through the heat exchanger H3 is prevented from exchanging heat with the heat medium through the heat exchanger H1 by the damper d2.

In the heat pump cycle S during heating, the on-off valve V is in an open state and the expansion valve E is in a closed state. Accordingly, the heat medium is circulated through the heat pump cycle S in the order of the compressor C, the heat exchanger H1, the electromagnetic valve 1, the heat exchanger H2, and the on-off valve V as illustrated by the dashed arrow in FIG. 1. At this time, the electromagnetic valve 1 is in a throttle control state.

During heating, air sent out by the blower B passes through the heat exchanger H3, and is then guided by the damper d2 located at the position illustrated by the two-dot chain line in FIG. 1 and passes through the heat exchanger H1. The air thus heated is supplied to the interior of the vehicle as illustrated by the open arrow in FIG. 1.

As described above, the electromagnetic valve 1 can switch between an open state in which it allows for the passage with the pressure of the heat medium during cooling remaining at approximately a primary pressure (namely, the pressure in a first pressure chamber)P₁, and a throttle control state in which the pressure of the heat medium during heating is reduced from the primary pressure P₁ to a secondary pressure (namely, the pressure in the second pressure chamber)P₂. In contrast, when an expansion valve such as that in Patent Citation 1 is applied, an on-off valve needs to be separately provided. Accordingly, the electromagnetic valve 1 according to this embodiment can reduce the number of parts used in the heat pump cycle S. The electromagnetic valve 1 will be described in detail below.

As illustrated in FIG. 2, the electromagnetic valve 1 mainly includes a valve housing 10, a valve body 51, a pressure sensitive body 61, and the solenoid 80, and a valve seat 15a in the valve housing 10 and the valve body 51 constitutes a valve 50.

The valve housing 10 is made of a metal or resin material and is formed into a stepped cylindrical shape. Two inlet ports 11 and two outlet ports 12 are formed in the peripheral wall of the valve housing 10.

The inlet ports 11 and the outlet ports 12 are formed by drilling a peripheral wall of the valve housing 10 in a radial direction. In addition, the inlet ports 11 are disposed on a side of the solenoid 80, and the outlet ports 12 are disposed on a side of the pressure sensitive body 61. Incidentally, the number and arrangement of the inlet ports 11 and the outlet ports 12 may be changed as appropriate.

A primary pressure chamber 13 as the first pressure chamber and a secondary pressure chamber 14 as the second pressure chamber are formed on the radially inner side of the valve housing 10.

The primary pressure chamber 13 is in communication with the inlet ports 11. The primary pressure chamber 13 is defined by the peripheral wall of the valve housing 10, an annular protruded portion 15 of the valve housing 10, a small-diameter end portion 16 of the valve housing 10, and a center post 82 of the solenoid 80.

The annular protruded portion 15 protrudes toward the radially inner side on the slightly left side with respect to the center of the peripheral wall of the valve housing 10 in an axial direction. In addition, the annular protruded portion 15 defines a communication flow passage 10a in communication with the primary pressure chamber 13 and the secondary pressure chamber 14. Further, an end portion of the annular protruded portion 15 on the radially inward side serves as the valve seat 15a.

The small-diameter end portion 16 is an annular portion bent toward the radially inner side from the left end of the peripheral wall of the valve housing 10.

The secondary pressure chamber 14 is in communication with the outlet ports 12. The secondary pressure chamber 14 is defined by the peripheral wall of the valve housing 10, the annular protruded portion 15, and a base 64 of the pressure sensitive body 61.

The valve body 51 has a base member 52, a shaft holding member 53, and a contact member 54 as a contact portion.

The base member 52 is formed in a substantially cylindrical shape, and the right end portion thereof in the axial direction has a curved surface 52a protruding toward the right side and toward the radially inner side.

Incidentally, in this embodiment, the curved surface 52a is formed in a flat shape extending linearly toward the right side in the axial direction and toward the radially inner side; however, the present invention is not limited thereto and the curved surface 52a may have a curved surface shape that is curved so as to protrude toward the radially outer side or the radially inner side, or a shape that reduces in diameter in a stepwise manner, and the shape may be changed as appropriate.

In addition, the through-hole extending through the center in the radial direction of the base member 52 in the axial direction is composed of a small-diameter hole portion 52b and a large-diameter hole portion 52c. The small-diameter hole portion 52b is open to the left side in the axial direction. The large-diameter hole portion 52c is open to the right side in the axial direction and is in communication with the small-diameter hole portion 52b.

The shaft holding member 53 is press-fitted and fixed to the small-diameter hole portion 52b of the base member 52. Incidentally, the shaft holding member 53 may be fixed to the base member 52 by shrink fit or by welding, and the fixing method may be changed as appropriate.

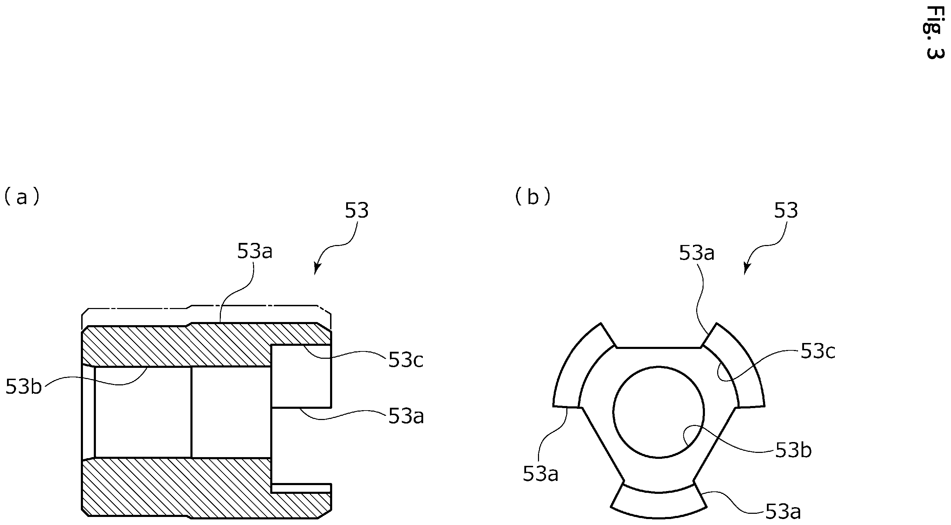

As illustrated in FIG. 3, the shaft holding member 53 has three through grooves 53a (see FIG. 3B) equiangularly arranged on the radially outer side and is formed in a cylindrical shape with steps in a circumferential direction.

The through grooves 53a each have side surfaces on opposite sides in the circumferential direction extending linearly from the outer peripheral surface of the shaft holding member 53 toward the substantially radially inward direction, and a bottom surface extending linearly across the radially inner ends of the side surfaces, and are open to the radially outer side. In addition, the through grooves 53a extend linearly in the axial direction and are open to the opposite sides in the axial direction. Incidentally, the arrangement, shape, and number of the through grooves 53a may be changed as appropriate. In addition, holes may be used instead of grooves.

In addition, the through-hole extending through the center in the radial direction of the shaft holding member 53 in the axial direction is composed of a small-diameter hole portion 53b and a large-diameter hole portion 53c. The small-diameter hole portion 53b is open to the left side in the axial direction. The large-diameter hole portion 53c is open to the right side in the axial direction and is in communication with the small-diameter hole portion 53b. In addition, the large-diameter hole portion 53c is in communication with the right end portions of the through grooves 53a in the axial direction.

Referring to FIG. 2, the right end portion of a shaft 83 is press-fitted and fixed to the small-diameter hole portion 53b of the shaft holding member 53. Incidentally, as with the base member 52 and the shaft holding member 53, the fixing method may be changed as appropriate.

Three equiangularly arranged communication passages 51a are formed inside the valve body 51. The communication passages 51a are defined by the inner peripheral surface of the small-diameter hole portion 52b of the base member 52 and the through grooves 53a (see FIG. 3) of the shaft holding member 53 internally fitted onto the small-diameter hole portion 52b.

The communication passages 51a are in communication with the large-diameter hole portion 53c (see FIG. 3) of the shaft holding member 53.

The left end portion of the contact member 54 is press-fitted and fixed to the large-diameter hole portion 52c of the base member 52. Incidentally, as with the base member 52 and the shaft holding member 53, the fixing method may be changed as appropriate.

The contact member 54 is formed in a cylindrical shape with a flange extending toward the radially outer side at the right end portion in the axial direction. The outer periphery and right end of the flange serves as a curved surface 54a protruding toward the right side and toward the radially inner side. Incidentally, as with the curved surface 52a, the shape of the curved surface 54a may be changed as appropriate, and may be a tapered surface gradually reducing in diameter toward the right side.

In addition, the contact member 54 has a through-hole 54b extending therethrough in the axial direction at the center in the radial direction. The through-hole 54b is in communication with the large-diameter hole portion 53c (see FIG. 3) of the shaft holding member 53.

The pressure sensitive body 61 mainly includes a bellows core 62, an adapter 63, the base 64, and a coil spring 65.

The left end portion of the bellows core 62 in the axial direction is fixed to the adapter 63 in a sealed manner. In addition, the right end of the bellows core 62 in the axial direction is fixed to the base 64 in a sealed manner. In addition, the coil spring 65 is disposed on the interior of the bellows core 62.

Incidentally, the coil spring may be provided on the exterior of the bellows core 62. In addition, the bellows core itself may have elasticity, and in the case of such a bellows core, the coil spring can be omitted.

The adapter 63 is formed in a cylindrical shape that has a T-shape facing left in a cross-sectional view, with a flange extending toward the radially outer side at the left end portion in the axial direction. A recessed portion 63a is formed in the center of the flange in the radial direction, recessed toward the right side in the axial direction, and open to the left side in the axial direction. More specifically, the recessed portion 63a is defined by a flat bottom portion 63b and a tubular portion 63c extending from the radially outer end of the flat bottom portion 63b toward the left in the axial direction.

In addition, the left end of the tubular portion 63c of the adapter 63 serves as a tapered surface 63d gradually reducing in diameter toward the right side in the axial direction. Incidentally, the shape of the tapered surface 63d may be changed as appropriate. In addition, the contact portion may have a tapered surface and the adapter may have a curved surface, or both may have tapered surfaces.

The base 64 is formed in a disk shape. In addition, the base 64 has a through-hole 64a extending therethrough in the axial direction in the center in the radial direction. The through-hole 64a is in communication with an internal space 66 defined by the bellows core 62, the adapter 63, and the base 64.

Here, the flow path communicating with the downstream side of the heat exchanger H1 is connected in parallel to the inlet ports 11 of the electromagnetic valve 1 and the through-hole 64a (see FIG. 1). Accordingly, the heat medium at the primary pressure that has passed through the heat exchanger H1 is introduced into the primary pressure chamber 13 and the internal space 66 of the pressure sensitive body 61.

In addition, when the pressure in the internal space 66 of the pressure sensitive body 61 is higher relative to the primary pressure of the heat medium that has passed through the heat exchanger H1, a portion of the heat medium in the internal space 66 is discharged from the through-hole 64a and introduced into the inlet ports 11.

Accordingly, the primary pressure chamber 13 and the internal space 66 of the pressure sensitive body 61 are maintained at substantially the same primary pressure.

In addition, the outlet ports 12 of the electromagnetic valve 1 are in communication with and are connected to the flow path communicating with the upstream side of the heat exchanger H2 (see FIG. 1).

The solenoid 80 is connected to the valve housing 10 and serves to apply a driving force to the valve body 51. The solenoid 80 mainly includes a casing 81, the center post 82, the shaft 83, a movable core 84, a coil spring 85, a coil 86, and a sleeve 87.

The casing 81 is formed in a stepped cylindrical shape.

The center post 82 is formed from a rigid body that is a magnetic material such as iron or silicon steel and is formed into a cylindrical shape that has a T-shape facing right in a cross-sectional view. The center post 82 is inserted from an opening portion of the casing 81 on the right side in the axial direction toward the left side in the axial direction. In addition, the right end portion of the center post 82 is internally fitted and fixed to the small-diameter end portion 16 of the valve housing 10. In addition, the small-diameter end portion 16 is internally fitted and fixed to the opening portion of the casing 81 on the right side in the axial direction.

The shaft 83 extends through the center post 82 and is disposed so as to be capable of reciprocating in the axial direction.

The left end portion of the shaft 83 in the axial direction is inserted into and is fixed to the movable core 84.

The coil spring 85 is provided between the center post 82 and the movable core 84 and biases the movable core 84 toward the left side in the axial direction, which is an opening direction of the valve 50.

The coil 86 is for excitation, and is wound around the outside of the center post 82 and the sleeve 87 via a bobbin.

The sleeve 87 is formed in a tubular shape with a bottom. A part of the center post 82, the movable core 84, and the coil spring 85 are placed inside the sleeve 87.

Next, a description will be given of the operating mode of the electromagnetic valve 1. Incidentally, in the description, a force acting on the valve body 51 toward the right side in the axial direction, namely, in the closing direction of the valve 50, may be described as a positive force, and a force acting on the valve body 51 toward the left side in the axial direction, namely, in the opening direction of the valve 50, may be described as a negative force.

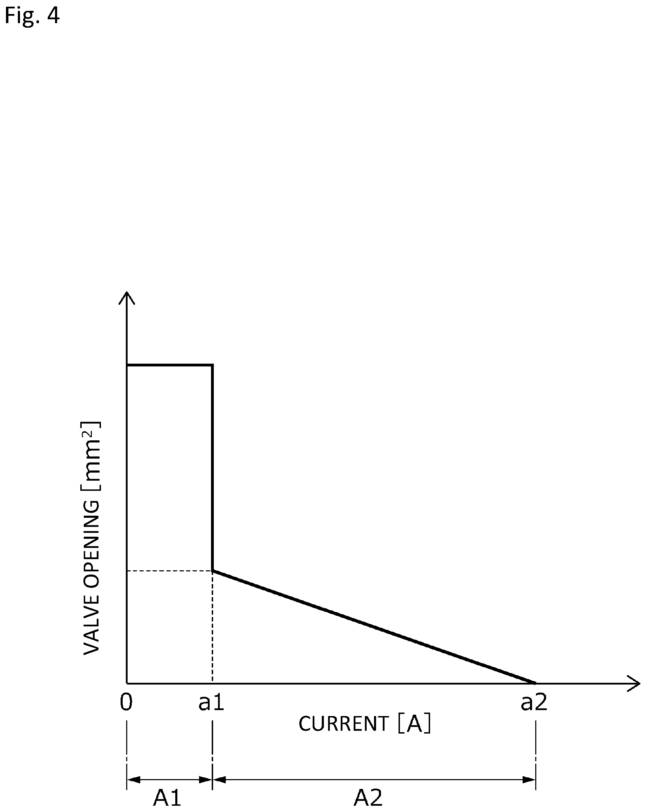

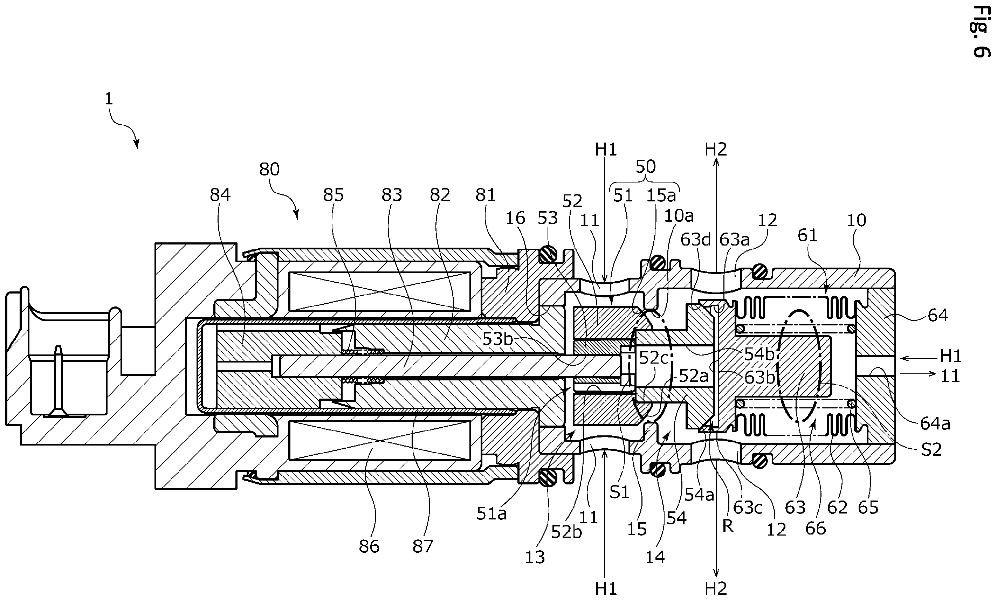

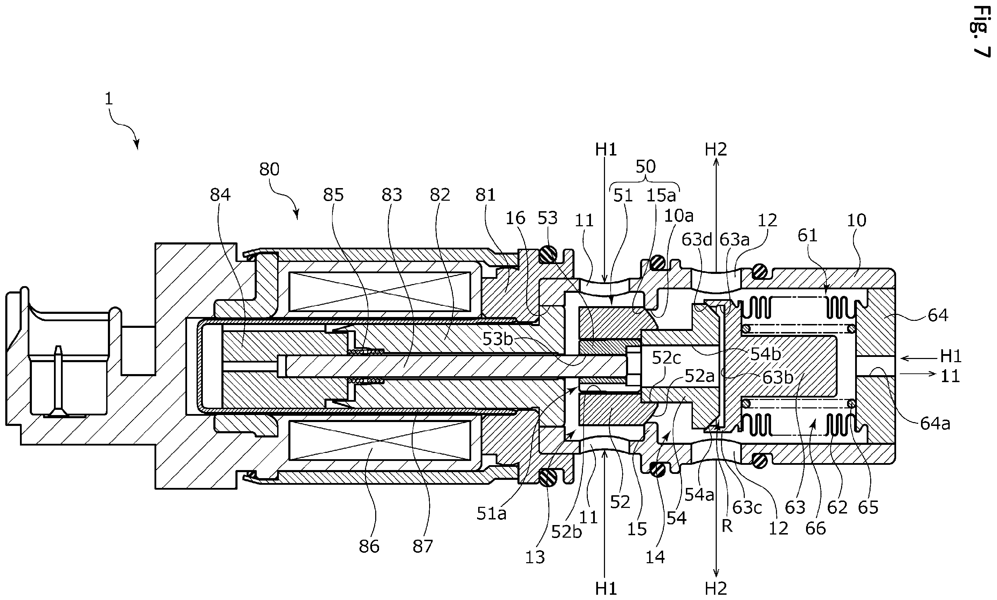

As illustrated in FIG. 4, the electromagnetic valve 1 can switch between a first mode A1 in which the valve 50 is in an open state (see FIG. 2) and a second mode A2 in which the valve 50 is in a throttle control state (see FIGS. 6 and 7) according to the amount of energization, including zero power which is de-energization. Hereinafter, the states of the electromagnetic valve 1 will be described in detail in the order in which the amount of energization increases from the de-energized state.

As illustrated in FIG. 2, when the electromagnetic valve 1 is in a de-energized state, the movable core 84 is pressed toward the left in the axial direction by the biasing force (Fₛₚ₁) of the coil spring 85. Accordingly, the valve body 51 is pressed against the center post 82 via the shaft 83.

At this time, the valve 50 is in the open state where its opening is at its maximum. Therefore, the heat medium introduced from the inlet ports 11 into the primary pressure chamber 13 passes through the communication flow passage 10a while maintaining substantially the primary pressure P₁, flows into the secondary pressure chamber 14, and then flows into the heat exchanger H2 on the secondary pressure side from the outlet ports 12. Therefore, the pressure of the heat medium in the primary pressure chamber 13 and the pressure of the heat medium in the secondary pressure chamber 14 are substantially the same pressure.

In addition, the valve body 51 is pressed against the center post 82. Accordingly, the heat medium at the primary pressure P₁ in the primary pressure chamber 13 is less likely to flow into the communication passages 51a of the valve body 51, the large-diameter hole portion 53c (see FIG. 3), and the through-hole 54b.

Meanwhile, the communication passages 51a of the valve body 51, the large-diameter hole portion 53c, and the through-hole 54b is in communication with the secondary pressure chamber 14 through the through-hole 54b. Accordingly, the heat medium at the secondary pressure P₂ in the secondary pressure chamber 14 flows into the communication passages 51a of the valve body 51, the large-diameter hole portion 53c, and the through-hole 54b.

Referring to FIGS. 2 and 4, when the electromagnetic valve 1 is in an energized state (namely, during normal control, or so-called duty control), if the current applied to the solenoid 80 is a1 amperes or less, the generated electromagnetic force (Fₛₒₗ) is equal to or less than the biasing force (Fₛₚ₁) of the coil spring 85 (Fₛₒₗ≦Fₛₚ). Therefore, the valve 50 is maintained in the open state (the first mode A1).

In addition, referring to FIGS. 4 to 6, when the current applied to the solenoid 80 exceeds a1 amperes, the generated electromagnetic force (Fₛₒₗ) exceeds the biasing force (Fₛₚ₁) of the coil spring 85 (Fₛₒₗ>Fₛₚ₁). Accordingly, the movable core 84 is attracted toward the side of the center post 82, namely, toward the right side in the axial direction, against the biasing force (Fₛₚ₁) of the coil spring 85. Accordingly, the valve body 51, which follows together with the shaft 83, comes into contact with the pressure sensitive body 61, so that the electromagnetic valve 1 switches from the first mode A1 to the second mode A2.

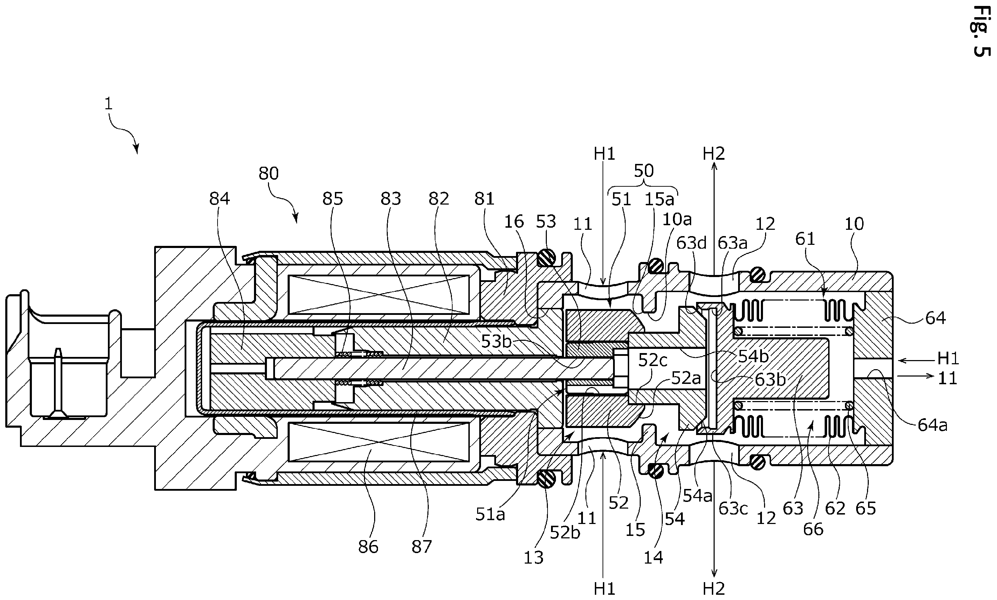

The switching from the first mode A1 to the second mode A2 will be described in detail below. As illustrated in FIG. 5, at the start of operation when the movable core 84 is attracted toward the right side in the axial direction and begins to move, the valve body 51 is separated slightly from the center post 82, following the movable core 84 and the shaft 83. At this time, the contact member 54 is separated from the adapter 63.

When the valve body 51 is separated from the center post 82, the communication passages 51a, the large-diameter hole portion 53c, and the through-hole 54b communicate with the primary pressure chamber 13 and the secondary pressure chamber 14. This allows the heat medium to pass through the communication passages 51a, the large-diameter hole portion 53c, and the through-hole 54b.

In addition, the effective area of the valve body 51 is reduced by the communication passages 51a compared to the effective area of a solid valve body. Therefore, the resistance generated when the valve body 51 moves is smaller than the resistance generated when the solid valve body moves.

Accordingly, the valve body 51 can momentarily come into contact with the pressure sensitive body 61 (see FIG. 6 ). Therefore, the electromagnetic valve 1 can immediately switch from the first mode A1 to the second mode A2.

In addition, when the valve body 51 comes into contact with the pressure sensitive body 61, the curved surface 54a of the contact member 54 of the valve body 51 comes into contact with the tapered surface 63d of the adapter 63 of the pressure sensitive body 61 (see FIG. 6). At this time, the curved surface 54a of the contact member 54 is guided by the tapered surface 63d of the adapter 63 so that its center axis is substantially aligned with the center axis of the pressure sensitive body 61. Accordingly, the valve body 51 is aligned with the pressure sensitive body 61. Incidentally, the center axis of the pressure sensitive body 61 is in advance aligned with the center axis of the valve seat 15a.

In addition, the right end of the contact member 54 in the axial direction, including the curved surface 54a, is internally fitted to and comes into contact with the left end of the adapter 63 in the axial direction (see FIG. 6). Accordingly, the valve body 51 is supported by the pressure sensitive body 61. Therefore, even if an external force such as vibration acts on the valve body 51, the valve body 51 is prevented from tilting.

In addition, when the curved surface 54a of the contact member 54 comes into contact with the tapered surface 63d of the adapter 63, a space R is defined inside the contact member 54 and the adapter 63 (see FIG. 6). The space R is formed by the large-diameter hole portion 53c of the valve body 51, the through-hole 54b of the valve body 51, and the recessed portion 63a of the adapter 63. Meanwhile, the space R is in communication with the primary pressure chamber 13 through the communication passages 51a of the valve body 51.

Accordingly, the heat medium flows through the space R in accordance with the fluctuations of the primary pressure P₁ of the heat medium in the primary pressure chamber 13. Therefore, the pressure of the heat medium in the space R is kept substantially equal to the primary pressure P₁ of the heat medium in the primary pressure chamber 13.

In addition, the curved surface 54a and the tapered surface 63d comes into contact with each other to seal the space R therebetween. Accordingly, in the electromagnetic valve 1, the heat medium at the primary pressure P₁ is prevented from accidentally flowing out of the space R into the secondary pressure chamber 14.

Referring to FIG. 6, in the second mode A2, the primary pressure P₁ of the heat medium in the primary pressure chamber 13, the sleeve 87, and the space R, the secondary pressure P₂ of the heat medium in the secondary pressure chamber 14, the primary pressure P₁ of the heat medium in the pressure sensitive body 61, the electromagnetic force (Fₛₒₗ), the biasing force of the coil spring 85 (Fₛₚ₁), and the biasing force of the coil spring 65 (Fₛₚ₂) act on the valve body 51.

The primary pressure P₁ of the heat medium in the primary pressure chamber 13, the sleeve 87, and the space R can be regarded as acting on an effective opening area S1 of the valve 50, namely, an effective area substantially the same as the flow passage cross-sectional area S1 of the communication flow passage 10a. Accordingly, the valve body 51 is pressed toward the right side in the axial direction by a force (F₁₁=P₁×S1).

The secondary pressure P₂ of the heat medium in the secondary pressure chamber 14 can be regarded as acting on the effective opening area S1 of the valve 50 and the effective area S2 of the pressure sensitive body 61. Accordingly, the valve body 51 is pressed toward the left side in the axial direction by a force (-F₂₁=-P₂×S1) and is pressed toward the right side in the axial direction by a force (F₂₂=P₂×S2).

The primary pressure P₁ of the heat medium in the pressure sensitive body 61 can be regarded as acting on an effective area S2 of the pressure sensitive body 61. Accordingly, the valve body 51 is pressed toward the left side in the axial direction by a force (-F₁₂=-P₁×S2).

The electromagnetic valve 1 is configured so that the effective opening area S1 of the valve 50 is the same as the effective area S2 of the pressure sensitive body 61 (S1=S2).

Accordingly, the force that the valve body 51 receives from the primary pressure P₁ (F_{P1}=F₁₁-F₁₂=P₁×S1-P₁×S2) is zero. In addition, the force that the valve body 51 receives from the secondary pressure P₂ (F_{P2}=-F₂₁+F₂₂=-P₂×S1+P₂×S2) is zero. Namely, the force that the valve body 51 receives from the primary pressure P₁ and the secondary pressure P₂ (F_{P1P2}=F_{P1}-F_{P2}) is zero.

Accordingly, in the second mode A2, the valve body 51 moves depending on the force acting on the valve body 51 (F=F_{P1P2}+Fₛₒₗ-(Fₛₚ₁+Fₛₚ₂)=Fₛₒₗ-(Fₛₚ₁+Fₛₚ₂)) .

Accordingly, the electromagnetic valve 1 can operate the valve body 51 in accordance with the difference between the generated electromagnetic force (Fₛₒₗ) and the sum of the biasing forces of the coil springs 65, 85 (Fₛₚ₁+Fₛₚ₂), without being affected by the pressure of the heat medium. Namely, the electromagnetic valve 1 can control the opening of the valve 50 corresponding to an input signal output from a control portion (not illustrated) with good response to the input signal.

Specifically, when the electromagnetic force (Fₛₒₗ) is above the sum of the biasing forces of the coil springs 65, 85 (Fₛₚ₁+Fₛₚ₂), the valve body 51 moves toward the right side in the axial direction against the sum of the biasing forces of the coil springs 65, 85 (Fₛₚ₁+Fₛₚ₂), reducing the opening of the valve 50. In addition, when the electromagnetic force (Fₛₒₗ) is below the sum of the biasing forces of the coil springs 65, 85 (Fₛₚ₁+Fₛₚ₂), the valve body 51 is pressed by the sum of the biasing forces of the coil springs 65, 85 (Fₛₚ₁+Fₛₚ₂) and moves toward the left side in the axial direction, increasing the opening of the valve 50.

Further, as illustrated in FIG. 4, when the current applied to the solenoid 80 reaches a2 amperes, the curved surface 52a of the valve body 51 is seated on the valve seat 15a as illustrated in FIG. 7. Accordingly, the valve 50 is brought into the closed state.

In the closed state, the curved surface 52a of the valve body 51 is guided by and seated on the valve seat 15a. Therefore, the valve 50 is stably brought into the closed state.

As illustrated in FIG. 4, the change in the opening of the valve 50 with respect to the current applied to the solenoid 80 is very gradual compared to the change in the opening when the electromagnetic valve 1 switches from the first mode A1 to the second mode A2. In addition, in the second mode A2, the valve body 51 is less affected by the primary pressure P₁ and the secondary pressure P₂ of the heat medium as described above. Therefore, the secondary pressure P₂ can be accurately controlled.

In addition, as described above, in the electromagnetic valve 1, the valve body 51 is aligned by the pressure sensitive body 61. Therefore, the electromagnetic valve 1 further improves the accuracy of control of the secondary pressure P₂. For example, when the center axis of the valve body is tilted relative to the center axis of the valve seat, there will be a difference in the opening between the valve body and the valve seat at various locations in the circumferential direction of the valve body, which may cause a difference from the desired secondary pressure P₂.

Meanwhile, when the current applied to the solenoid 80 is equal to or less than a1 amperes, the generated electromagnetic force (Fₛₒₗ) is below the biasing force (Fₛₚ₁) of the coil spring 85 (Fₛₒₗ<Fₛₚ₁) . Accordingly, the movable core 84 is pressed by the biasing force (Fₛₚ₁) of the coil spring 85 and moves toward the opposite side to the center post 82, namely, toward the left side in the axial direction. Accordingly, the valve body 51, which follows together with the shaft 83, is separated from the pressure sensitive body 61 (see FIGS. 2 and 5), and the electromagnetic valve 1 switches to the first mode A1.

The switching from the second mode A2 to the first mode A1 will be described in detail. As described above, in the second mode A2, the pressure of the heat medium in the space R is kept substantially equal to the primary pressure P₁ of the heat medium in the primary pressure chamber 13. Accordingly, the movement of the valve body 51 is prevented from being hindered.

In addition, as described above, the heat medium flows through the space R in accordance with the fluctuations in the primary pressure P₁ of the heat medium in the primary pressure chamber 13. Therefore, in the electromagnetic valve 1, the reduction of pressure in the space R caused by the valve body 51 being separated from the pressure sensitive body 61, which would make separation difficult, is prevented.

In addition, as described above, the communication passages 51a, the large-diameter hole portion 53c, and the through-hole 54b communicates with the primary pressure chamber 13 and the secondary pressure chamber 14, so that resistance during movement of the valve body 51 is reduced. This allows the valve body 51 to be separated from the pressure sensitive body 61 momentarily.

Accordingly, the electromagnetic valve 1 can immediately switch from the second mode A2 to the first mode A1.

As described above, as illustrated in FIG. 4 , in the electromagnetic valve 1, the change in the opening of the valve 50 between the open state and the closed state, namely, the amount of movement of the valve body 51, changes intermittently with respect to the current applied to the solenoid 80.

Accordingly, when switching from cooling to heating, the electromagnetic valve 1 is promptly brought into the throttle control state, allowing the primary pressure P₁ to be reduced to the desired secondary pressure P₂. In addition, when switching from heating to cooling, the electromagnetic valve 1 is promptly brought into the open state, allowing the heat medium to pass while maintaining the primary pressure P₁.

For example, an electromagnetic valve whose opening changes proportionally or quadratically from a position of the valve body in the de-energized state until the valve body is seated on the valve seat requires time to transition to the throttle control state or the open state when switching from cooling to heating or from heating to cooling, during which time a heat medium at an unintended pressure is likely to be supplied to the secondary side.

In addition, the electromagnetic valve 1 can switch between the function of an on-off valve and the function of a pressure reducing valve only by controlling the current applied to the solenoid 80. Therefore, the electromagnetic valve 1 can contribute to simplifying control compared to a configuration in which an on-off valve and a pressure reducing valve that are separately provided must be controlled individually.

The embodiments of the present invention have been described above with reference to the drawings; however, the specific configurations are not limited to the embodiments, and changes or additions that are made without departing from the scope of the present invention are included in the present invention.

For example, in the embodiment, the valve is described as being applied to a heat pump cycle; however, the present invention is not limited thereto, and the valve may be applied to a hydraulic circuit and the configuration may be changed as appropriate.

In addition, in the embodiment, the fluid passing through the valve is described as a heat medium; however, the present invention is not limited thereto, and the type of fluid may be water, air, or the like and be changed as appropriate, the state of the fluid may be air, liquid, mist, or the like and be changed as appropriate, and the type and state of the fluid may be combined.

In addition, in the embodiment, the valve is described as being used both as an on-off valve and as a pressure reducing valve; however, the present invention is not limited thereto, and for example, the valve may be used only as a pressure reducing valve or only as an on-off valve.

In addition, in the embodiment, the valve is exemplified as an expansion valve as a function of a pressure reducing valve; however, the present invention is not limited thereto, and the valve may be a pressure reducing valve other than an expansion valve.

In addition, in the embodiment, the valve is described as a solenoid operated electromagnetic valve; however, the present invention is not limited thereto, and the valve may be driven by rotation by a motor or may be operated manually, or the configuration may be changed as appropriate.

In addition, in the embodiment, the valve is described as a normally open valve which is in an open state when de-energized; however, the present invention is not limited thereto, and the valve may be a normally closed valve, which is in a closed state when de-energized.

In addition, in the embodiment, the description will be made based on the assumption that the effective opening area of the valve is the same as the effective area of the pressure sensitive body; however, the present invention is not limited thereto, and they may be different from each other. Even with this configuration, the force acting on the valve body can be reduced by the area where the effective opening area of the valve and the effective area of the pressure sensitive body overlap.

In addition, in the embodiment, the open state is described as the state where the opening of the valve is at its maximum; however, the present invention is not limited thereto, and as long as the opening allows the heat medium to pass while maintaining a constant or approximately constant pressure, it may not have to be at its maximum.

In addition, in the embodiment, the opening of the valve in the first mode is described as being kept substantially constant; however, the present invention is not limited thereto, and as long as the opening of the valve is smaller than the change in the opening of the valve when switching from the first mode to the second mode, it may be changed as appropriate.

In addition, in the embodiment, the opening of the valve when transitioning from the first mode to the second mode is described as changing rapidly, substantially perpendicular to the change in the opening of the valve in the first mode however, the present invention is not limited thereto, and as long as it changes more rapidly than the change in the opening of the valve in the second mode, the configuration may be changed as appropriate.

In addition, in the embodiment, the opening of the valve in the second mode is described as changing proportionally; however, the present invention is not limited thereto, and it may change quadratically.

In addition, in the embodiment, the valve body is described as including the base member, the shaft holding member, and the contact member; however, the present invention is not limited thereto, and the valve body may be a single member. For example, the contact portion may be a part of the base member.

In addition, in the embodiment, the valve body is a separate member from the shaft; however, the present invention is not limited thereto, and the valve body may be integrated with the shaft. For example, the shaft and the shaft holding member may be a single member.

In addition, in the embodiment, the space defined by the valve body and the pressure sensitive body in the second mode is described as being in communication with the primary pressure chamber; however, the present invention is not limited thereto, and the primary pressure chamber side may be closed and the space may be in communication with the secondary pressure chamber. For example, the adapter may have a through-hole communicating with the secondary pressure chamber. Even with this configuration, the valve body and the pressure sensitive body can smoothly come into contact with each other and the valve body and the pressure sensitive body can be smoothly separated from each other.

In addition, in the embodiment, the space is described as being defined by the valve body and the pressure sensitive body in the second mode; however, the present invention is not limited thereto, and the valve body and the pressure sensitive body may by fitted together in a concave-convex manner so that no space is formed. Even with this configuration, it is preferable from the viewpoint of the contact and separation of the valve body and the pressure sensitive body to configure so that no heat medium remains between the valve body and the pressure sensitive body which are fitted together in a concave-convex manner.

In addition, in the embodiment, the three communication passages 51a of the valve body 51 having openings within the effective opening area S1 of the valve 50 is described as the communication passages of the valve body; however, the present invention is not limited thereto, and the communication passages may be configured to be in communication with the primary pressure chamber 13 and the space R. For example, the communication passages may be configured to be open in a radially outward direction rather than being open to the right end of the valve body in the axial direction, and the configuration may be changed as appropriate.

In addition, in the embodiment, the heat medium is described as flowing from the primary pressure chamber 13 to the secondary pressure chamber 14; however, the present invention is not limited thereto, and for example, referring to FIG. 2, the heat medium may flow from the pressure chamber 14 to the pressure chamber 13. Namely, in the throttle control state of the valve, the second pressure chamber may be the primary pressure side and the first pressure chamber may be the secondary pressure side.

### {REFERENCE SIGNS LIST}

- 1: Electromagnetic valve (valve)
- 13: Primary pressure chamber (first pressure chamber)
- 14: Secondary pressure chamber (second pressure chamber)
- 15a: Valve seat
- 50: Valve
- 51: Valve body
- 51a: Communication passage
- 54: Contact member (contact portion)
- 54a: Curved surface
- 61: Pressure sensitive body
- 63: Adapter
- 63d: Tapered surface
- 66: Internal space
- 80: Solenoid
- A1: First mode
- A2: Second mode
- P1: Primary pressure
- P2: Secondary pressure
- R: Space
- S1: Effective opening area
- S2: Effective area

## Claims

1. A valve, comprising:
a valve body provided between a first pressure chamber and a second pressure chamber and controlling a flow rate of fluid passing through the first pressure chamber and the second pressure chamber by opening and closing of the valve;
a valve seat; and
a pressure sensitive body into which pressure in the first pressure chamber is introduced and which is disposed in a portion of the second pressure chamber and configured for coming into contact with and separating from the valve body.

2. The valve according to claim 1, wherein
the valve is switchable between a first mode in which the valve is in an open state and a second mode in which throttle control of the valve is performed at a position of the valve body closer to the valve seat than in the open state.

3. The valve according to claim 2, wherein
the valve body is separated from the pressure sensitive body in the first mode and brought into contact with the pressure sensitive body in the second mode.

4. The valve according to claim 3, wherein
the pressure sensitive body has an adapter,
the valve body has a contact portion at an end, and
at least one of the adapter and the contact portion has a tapered surface, and the tapered surface and remaining one of the adapter and contact portion are brought into contact with and separated from each other.

5. The valve according to claim 4, wherein
the valve body has a communication passage that communicates with a space defined by the contact portion of the valve body and the adapter and with the first pressure chamber in the second mode.

6. The valve according to any one of claims 1 to 5, wherein
an effective opening area of the valve and an effective area of the pressure sensitive body are equal to each other.
